# EUROPÄISCHE PATENTSCHRIFT

(11) **EP 2 812 967 B1**
(45) Veröffentlichungstag und Bekanntmachung des Hinweises auf die Patenterteilung: **06.04.2016**
(21) Anmeldenummer: 13700463.6
(22) Anmeldetag: 02.01.2013
(51) Int. Cl.: H02G 11/02, B25J 19/00

(54) **DREHÜBERTRAGER FÜR ROBOTER**
ROTARY TRANSMITTER FOR ROBOTS
TRANSFORMATEUR TOURNANT POUR ROBOT

(30) Priorität: 06.02.2012 DE 102012201695
(43) Veröffentlichungstag der Anmeldung: 17.12.2014
(73) Patentinhaber: Robert Bosch GmbH, 70442 Stuttgart (DE)
(72) Erfinder: RUEB, Andreas, 71679 Asperg (DE)
(86) Internationale Anmeldenummer: PCT/EP2013/050004
(87) Internationale Veröffentlichungsnummer: WO 2013/117349

(56) Entgegenhaltungen:
- WO-A1-2011/136008
- JP-A- 2011 194 520
- US-A- 4 157 472
- US-A1- 2004 149 533
- US-B1- 7 559 590

## Beschreibung

### Stand der Technik

Die Erfindung betrifft einen Drehübertrager für einen Roboter, bei dem eine Leitung von einem Roboterarm auf ein drehendes Teil des Roboterarms geführt wird.

JP 2011 194520 offenbart einen Drehübertrager für einen Roboter nach dem Oberbegriff des Anspruchs 1.

DE 37 15 921 A1 offenbart eine Vorrichtung zur Führung von Kabeln zwischen zwei gelenkig miteinander verbundenen Bauteilen, welche um einen begrenzten Winkel gegeneinander schwenkbar oder drehbar sind. Die Vorrichtung umfasst ein Gehäuse, das ein rohrförmiges Element umgibt. Ein Kabel erstreckt sich in axialer Richtung durch das rohrförmige Element und ist durch eine Öffnung im rohrförmigen Element aus diesem herausgeführt. Ferner erstreckt sich ein Kabel spiralförmig in einem Innenraum des Gehäuses und wird durch eine Öffnung im Gehäuse aus diesem herausgeführt. Ferner ist das Kabel von einer biegsamen Führungshülse umgeben.

WO 2005/112215 A1 offenbart einen Drehübertrager für Kabelverbindungen, der eine Längsachse umfasst, auf der Trennscheiben angeordnet sind. Zwischen den Trennscheiben und der Längsachse sind Lagern abgebracht, die ein Drehen der Trennscheiben um die Längsachse gewährleisten. Ferner weist der Drehübertrager ein Kabel auf, das spiralförmig um die Längsachse gewickelt ist. Des Weiteren weisen die Trennscheiben Durchbrüche auf, durch die ein Kabel zwischen benachbarten Trennscheiben hindurchgeführt sind. Dabei weist das Kabel ein geringes seitliches Spiel auf.

### Offenbarung der Erfindung

Es wird ein Drehübertrager vorgeschlagen, insbesondere für einen Roboter, umfassend einen Stator mit zentrischer Ausnehmung in einem Boden, einen Rotor, der in der Zentrischen Ausnehmung im Boden drehbar aufgenommen ist, mindestens eine Leitung, wobei ein Abschnitt der Leitung an einer Innenwand des Stators biegeschlaff geführt ist, und der Abschnitt eine Länge für ein zuglastfreies Folgen der Leitung einer Drehung des Rotors um einen Drehwinkel aufweist,dadurch gekennzeichnet, dass mehrere Führungsrollen im Zwischenraum zwischen dem Stator und dem Rotor drehbar aufgenommen sind, und in gleichen Winkelabständen zueinander angeordnet sind.

Der Rotor weist eine Mantelfläche auf, in der eine Ausnehmung ausgebildet ist. Durch die Ausnehmung in der Mantelfläche des Stators ist eine Leitung durchgeführt, die an einem Ende in der Ausnehmung an der Mantelfläche des Rotors aufgenommen ist. Die Leitung erstreckt sich dabei durch einen Zwischenraum zwischen dem Stator und dem Rotor. In dem Zwischenraum ist ferner eine Mehrzahl von Führungsrollen aufgenommen. Der Stator wird von einem Deckel verschlossen, der eine zentrische Ausnehmung aufweist, in der eine Stirnfläche des Rotors aufgenommen ist. Dabei ist der Deckel ausgebildet, um eine fest Verbindung mit einem Ende des Roboterarms zu bilden, wobei zwischen dem Rotor und einem Antriebsflansch am Ende des Roboterarms eine drehmoment-übertragende Kopplung gewährleistet ist. Im Stator ist ferner ein Abschnitt der Leitung an einer Innenwand biegeschlaff geführt. Dabei weist der Abschnitt eine Länge auf, die ein zuglastfreies Folgen bei einer Drehung des Rotors um einen Drehwinkel erlaubt. Ferner folgen die Führungsrollen der Drehbewegung in eine Umfangsrichtung und drehen sich hierbei um eine eigene Achse. Die Führungsrollen sind hierbei auf einem im Wesentlichen ringförmigen Rollenträger geführt, der einer Drehbewegung in Umfangsrichtung folgt.

In einer bevorzugten Ausführungsform der Erfindung ist die Leitung als elektrische Leitung und/oder als Datenleitung und/oder als optische Faser und/oder eine Fluidleitung ausgebildet. Ferner kann die Leitung auch als ein Flachbandkabel ausgeführt sein. Des Weiteren kann der Drehübertrager so ausgebildet sein, dass eine Mehrzahl von Leitungen im Stator aufgenommen ist, die jeweils durch eine eigene Ausnehmung in der Mantelfläche in den Stator hineingeführt werden. Die Ausnehmungen in der Mantelfläche des Stators sind hierbei schlitzförmig ausgebildet und weisen vorzugsweise zueinander gleiche Winkelabstände auf, die die Mantelfläche des Stators in gleich große Umfangsabschnitte einteilt. Dabei befinden sich die Achsen auf einem ringförmigen Rollenträger, der in den Stator eingelegt ist. Ferner ist die mindestens eine Leitung, die durch den Zwischenraum zwischen Rotor und Stator geführt ist, jeweils mit einer Klemmplatte im Bereich der Ausnehmung an der äußeren Mantelfläche des Stators bzw. des Rotors montiert.

In einer bevorzugten Ausführungsform der Erfindung weist der Drehübertrager ein Kabelgehäuse auf, das an der äußeren Mantelfläche des Stators ausgebildet ist. Im Kabelgehäuse werden Leitungen, die aus dem Stator austreten, zusammengeführt und eine vorgelagerte Verkabelung des Roboters angeschlossen. Dabei werden Leitungen, die nicht im Bereich des Kabelgehäuses aus dem Stator treten, anliegend an dessen äußerer Mantelfläche zum Kabelgehäuse geführt.

In einer besonders bevorzugten Ausführungsform der Erfindung ist die Länge des Abschnitts der Leitung, der sich zwischen dem Stator und dem Rotor befindet, in einer Länge ausgeführt, die der Leitung ein zuglastfreies Folgen der Drehung des Rotors um ± 360° erlaubt.

Des Weiteren können die Stator-Innenwand, die Mantelfläche des Rotors und/oder die Mantelflächen der Führungsrollen derart ausgebildet sein, dass diese mit der Leitung eine adhäsive Kopplung eingehen.

In einer weiteren bevorzugten Ausführungsform der Erfindung weist der Drehübertrager mindestens fünf Führungsrollen auf.

### Vorteile der Erfindung

Der erfindungsgemäße Drehübertrager für einen Roboter stellt eine Möglichkeit zur Verfügung, Komponenten, wie z. B. Steuergeräte, Sensoren oder Werkzeuge, miteinander über Leitungen zu verbinden, wobei sich die Verbindung über ein drehbares Ende eines Roboterarms erstreckt. Dabei wird die Leitung mechanisch nur minimal beansprucht, und in Ausführungsformen, in denen eine Mehrzahl von Leitungen zum Einsatz kommt, wird ein Verknoten oder Verknäulen der Leitungen verhindert. Die Leitungen bleiben in einem geordneten Zustand, in dem sich die Leitungen in ihrer Bewegung nicht gegenseitig behindern. Das drehbare Ende des Roboterarms hat hierbei ein hohes Maß an Bewegungsfreiheit in Rotationsrichtung.

Die,Mehrzahl an Führungsrollen gewährleistet eine einfache und effiziente Führung der Leitung. Bei einem Abwickeln der Leitung vom Rotor wird insbesondere eine Rückführung der Leitung an die Innenwand des Stators durch die Führungsrollen gewährleistet. Die Führungsrollen definieren Zwischenräume, und separieren verschiedene Leitungen, und verhindern ein Verknoten oder Verknäulen der Leitungen. Ferner erlaubt das biegeschlaffe Verhalten der Leitung ein leichtgängiges Folgen eine Drehbewegung des Rotors und ein lastarmes Anlegen an die Mantelfläche des Rotors, der Führungsrolle und der Innenwand des Stators.

Der erfindungsgemäße Drehübertrager kann ein Vielzahl von Typen von Leitungen aufnehmen und in einen Roboterarm einbinden. Die Leitung kann als elektrische Leitung, als Datenleitung, als optische Faser, als Fluidleitung oder als eine Kombination hiervon ausgebildet sein. Folglich ist ein weites Verwendungsspektrum gewährleistet. Wird die Leitung in einer weiteren vorteilhaften Weise als Flachbandkabel ausgeführt, verbessert sich hierdurch das Anlegen der Leitung an die Innenwand des Stators, die Mantelfläche des Rotors und die Mantelfläche der Führungsrolle. Hierdurch wird die oben beschriebene vorteilhafte Wirkung der genannten Komponenten weiter gesteigert.

Ferner erlaubt der vorgeschlagene Drehübertrager, eine Mehrzahl von Leitungen aufzunehmen, und für die Leitungen eine entsprechende Anzahl an Ausnehmungen am Stator und am Rotor vorzusehen. Hierbei ist jeder Leitung je eine separate Ausnehmung am Stator und am Rotor zugeordnet. Ferner erlaubt eine schlitzförmige Ausführung der Ausnehmungen, die Leitungen nebeneinander angeordnet nahezu tangential in den Stator einzuführen, und unmittelbar an der Innenwand des Stators anliegen zu lassen. Hierdurch werden Verformungen, wie z.B. Knicke, die zu Kabelbrüchen oder Stauungen in den Leitungen führen, vermieden. Des Weiteren ermöglicht eine Anordnung der schlitzförmigen Ausnehmungen an der äußeren Mantelfläche des Stators mit gleichmäßigen Abständen in Umfangsrichtung des Stators, bzw. gleichen Winkelabständen bezogen auf einen Mittelpunkt des Stators, eine effiziente Nutzung des Innenraums des Stators. Ferner weisen die Leitungen hierbei während des Betriebs einen maximalen Abstand auf, wodurch an der Innenwand des Stators Bereiche minimiert werden, in denen zwei Leitungen übereinander liegen. Hierdurch wird verhindert, dass lange Abschnitte der Leitungen im Betrieb aufeinander reiben und verschleißen.

Ferner gewährleisten mehrere drehbare Führungsrollen im Zwischenraum zwischen Stator und Rotor, die zueinander gleiche Winkelabstände aufweisen, eine effiziente Nutzung des Innenraum des Stators. Eine Leitung, die entlang der Mantelfläche des Rotors geführt ist, wird von gleichmäßig beabstandeten Führungsrollen unterbrechungsfrei geführt, und ein Lösen von der Mantelfläche des Rotors unterbunden. Eine Leitung, die sich von der Mantelfläche des Rotors löst und sich in Form einer Schlaufe in den Zwischenraum erstreckt, kann durch den Stator erfasst und mitgerissen werden. Dies würde zu einer Beschädigung der Leitung und damit zu einer Beeinträchtigung der Funktionsweise des Drehübertragers führen. Eine Anordnung der Führungsrollen mit gleichmäßigen Winkelabständen erhöht die Robustheit des Drehübertragers. Ferner erlaubt der Einsatz von mindestens fünf Führungsrollen eine stabile und leichtgängige Betätigung des Drehübertragers.

Des weiteren ermöglicht eine Ausführungsform des erfindungsgemäßen Drehübertragers, bei der die Führungsrollen auf je einer Achse gelagert ist, die sich auf einem ringförmigen Rollenträger befindet, eine einfache Montage. Hierbei nimmt die Mehrzahl an Führungsrollen auf dem ringförmigen Rollenträger sofort beim Einbringen in den Stator ihre endgültige Einbaulage ein. Es ist möglich, während des Montierens die Funktionalität des Drehübertragers zu prüfen. Im Falle eines Montagefehlers wird ein aufwändiges erneutes Öffnen des Drehübertragers vermieden. Der erfindungsgemäße Drehübertrager ist einfach umzurüsten, wodurch die Einsatzflexibilität steigt. Ferner gewährleistet der Rollenträger gleiche Winkelabstände der Führungsrollen zueinander und verhindert, dass sich drehende Führungsrollen berühren. Berühren sich im Betrieb drehende Führungsrollen, verursachen deren gegeneinander bewegte Mantelflächen Reibung, die einen gleichmäßigen und leichtgängigen Lauf des Drehübertragers stört.

Des weiteren gewährleistet eine Klemmplatte zum Befestigen der Leitung an der äußeren Mantelfläche des Stators und/oder Rotors eine erhöhte Robustheit und Fehlertoleranz des Drehübertragers. Die Klemmplatte entlastet den Abschnitt der Leitung, der sich zwischen Stator und Rotor befindet, von Zugkräften. Derartige Zugkräfte können durch die vorgelagerte Kabelführung erzeugt werden. Ferner verhindert das Befestigen der Leitung mit der Klemmplatte, dass die Leitung bei einem Betätigen des Drehübertragers in eine Ausnehmung des Rotors oder Stators eingezogen wird. Ein Einziehen der Leitung ist mit einem hohen Risiko einer Beschädigung oder eines Bruchs der Leitung verbunden. Tritt ein Bruch oder eine Beschädigung der Leitung auf, führt dies zu einem Ausfall des Roboters.

Ferner wird eine Ausführungsform des Drehübertragers bevorzugt, bei der die Leitungen an der Innenwand des Stators vom Eintritt in den Stator zum Eintritt in den Rotor hin in gleicher Umfangsrichtung verlegt sind. Hierdurch wird der Raum im Stator effizient genutzt. Ferner wird der Abschnitt der Leitung, der sich außerhalb des Stators erstreckt, entlang von dessen äußerer Mantelfläche in den Bereich eines Kabelgehäuses geführt. Hierdurch kann das zugehörige Ende der Leitung in einfacher Weise befestigt, abgedeckt und kontaktiert werden. Besonders vorteilhaft ist hierbei, wenn das Kabelgehäuse im Inneren mit Kontaktstellen verstehen ist, die mit standardisierten Steckern gekoppelt sind, die an einer Außenseite des Kabelgehäuses angebracht sind. Hierdurch wird eine kompakte Schnittstelle geschaffen, mittels der die über die Leitung angebundenen Sensoren, Steuergeräte oder Werkzeuge in den Roboter eingebunden werden können.

In einer weiteren vorteilhaften Ausführungsform ist der Drehübertrager derart ausgebildet, dass ein zuglastfreies Drehen des Drehübertragers um einen Drehwinkel von +/-360° möglich ist. Ein Drehwinkel von +/- 360° stellt dem Roboter einen Arbeitsbereich zur Verfügung, der ein weites Spektrum von Operationen erlaubt.

In einer weiteren vorteilhaften Ausführungsform wird einem Lösen der Leitung von der Stator-Innenwand, der Mantelfläche des Rotors und/oder Mantelflächen der Führungsrollen entgegengewirkt, indem die Stator-Innenwand, die Mantelfläche des Rotors und/oder die Mantelflächen der Führungsrollen derart ausgebildet sind, dass mit der Leitung bei Kontakt eine adhäsive Kopplung vorliegt.

### Kurze Beschreibung der Zeichnungen

Anhand der Zeichnungen wird die Erfindung nachstehend eingehender beschrieben.

Es zeigen:
- Figur 1: eine Schrägansicht des Drehübertragers im teilweise montierten Zustand,
- Figur 2: eine schematische Explosionszeichnung des Drehübertragers,
- Figur 3: eine Draufsicht des Drehübertragers ohne Deckel

### Ausführungsformen der Erfindung

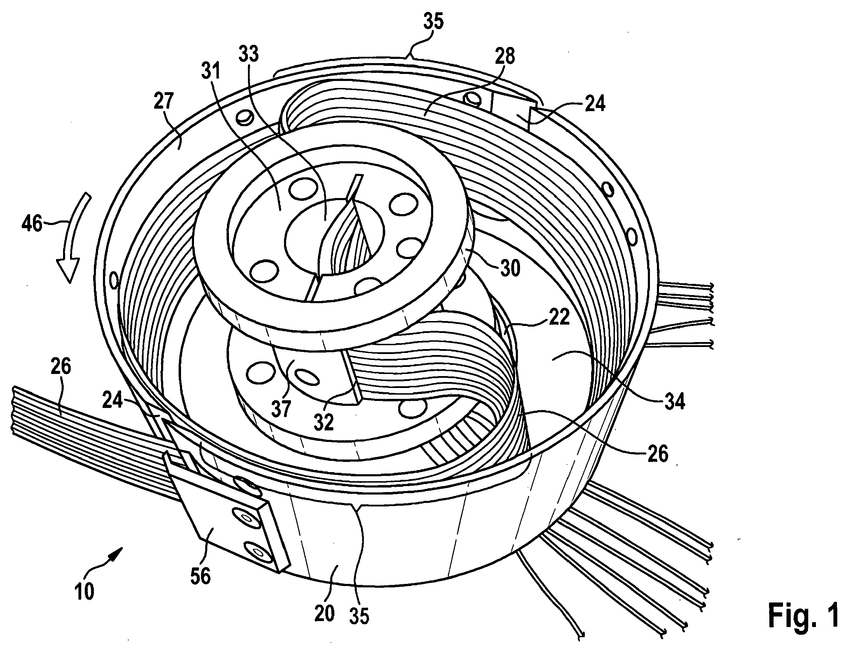

Figur 1 zeigt einen Stator 20, in dem ein Rotor 30 aufgenommen ist. Der Stator 20 weist hierzu in seinem Boden eine zentrische Ausnehmung 22 auf, in der der Rotor 30 drehbar gelagert ist. Der Stator 20 weist an seiner Mantelfläche Ausnehmungen 24 auf, die schlitzförmig ausgebildet sind. Durch die schlitzförmigen Ausnehmungen 24 sind Leitungen 26 geführt, die als Flachbandkabel ausgeführt sein können. Ferner treten die Leitungen 26 an den Ausnehmungen 24 in der Mantelfläche des Stators 20 praktisch tangential ein. Knicke in den Leitungen 26 werden somit verhindert, und Beschädigungen, z.B. Kabelbrüchen, vorgebeugt. Die Leitungen 26 werden an der Ausnehmung 24 mittels Klemmplatten 56 befestigt. Ferner liegen die Leitungen 26 zwischen dem Eintritt in den Stator 20 und ihrer Aufnahme in die Ausnehmung 32 am Rotor 30 in einem Bereich an der Innenwand 27 des Stators 20 an. Des Weiteren sind die Leitungen 26 biegeschlaff und in gleicher Umfangsrichtung 46 verlegt. Zwischen dem Stator 20 und dem Rotor 30 befindet sich ein Zwischenraum 34, der zur Aufnahme von Führungsrollen 40 ausgebildet ist. Die Führungsrollen 40 sind der Übersichtlichkeit halber in Fig. 1 nicht dargestellt. Des Weiteren sind Leitungsabschnitte 28 zweier Leitungen 26 an einer Stator-Innenwand 27 ausgebildet, in denen zwei Leitungen 26 übereinander liegen, und einen Überlappungsabschnitt 35 ausbilden. Eine Stirnseite 31 des Rotors 30 ist mit einer mechanischen Schnittstelle 33 ausgebildet, und gewährleistet eine drehmoment-übertragende Verbindung mit einem Antriebsflansch am Ende des Roboterarms, mit dem der Drehübertrager 10 im Betrieb verbunden ist. Der Rotor 30 weist Ausnehmungen 32 auf, in denen jeweils eine Leitung 26 aufgenommen ist. Dabei ist die Mantelfläche 37 des Rotors 30 zur Aufnahme von Klemmplatten 56 ausgebildet.

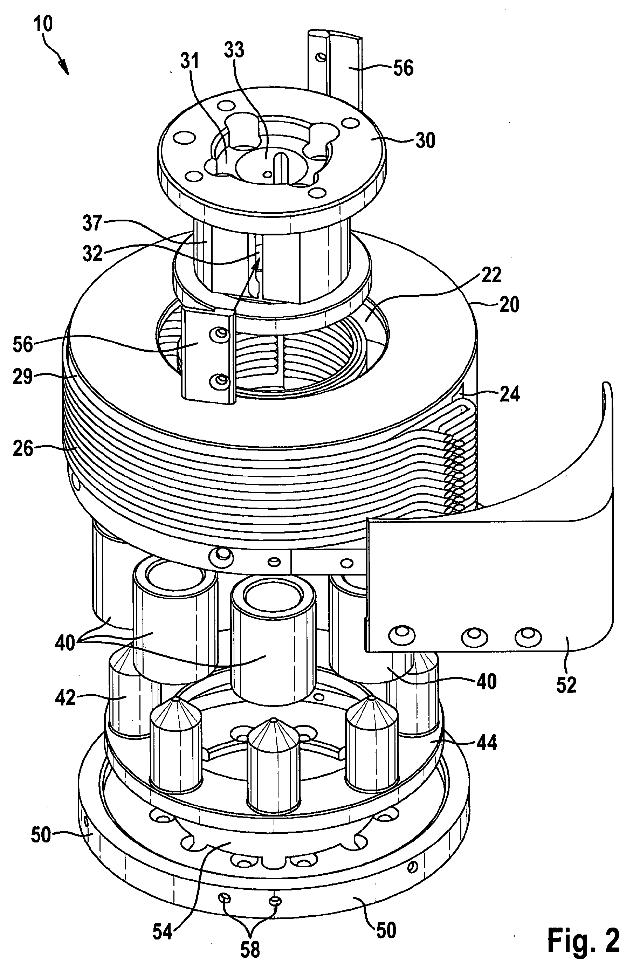

In Figur 2 ist schematisch eine Explosionszeichnung des montierten Drehübertragers abgebildet.

Der Stator 20 ist mit einem Deckel 50 verschlossen, der eine zentrische Ausnehmung 52 aufweist, in der eine Stirnseite 31 des Rotors 30 drehbar aufgenommen wird. Der Deckel 50 weist an einem Umfangsabschnitt Befestigungsstellen 58 auf, mittels derer der Deckel 50 mit dem Stator 20 und dem Kabelgehäuse 52 verbindbar ist. Im Zwischenraum 34 zwischen dem Stator 20 und dem Rotor 30 sind Führungsrollen 40 angeordnet. Die Führungsrollen 40 sind auf Achsen 42 drehbar gelagert, wobei die Achsen 42 auf einem Rollenträger 44 ausgebildet sind. Der Rollenträger 44 ist dabei gegen den Deckel 50 abgestützt. Die Leitung 26, die im Zwischenraum 34 vom Stator 20 zum Rotor 30 geführt wird, weist einen in Fig. 2 verdeckten Abschnitt auf, der sich zwischen zwei Führungsrollen 40 erstreckt. Hierbei verläuft die Leitung 26 vom Abschnitt 28 an der Stator-Innenwand 27 zur Ausnehmung 32 am Rotor 30. Bei einer Drehbewegung des Rotors 30 liegt die Leitung 26 an einer Führungsrolle 40 an. Dadurch ist ein geführtes Abwickeln der Leitung 26 zwischen den Führungsrollen 40 und der Innenwand 27 des Stators 20 gewährleistet. Ferner erlaubt die Führung an der Führungsrolle 40, dass bei einem Abwickeln der Leitung 26 vom Rotor 30 kein Verknoten oder Verknäulen der Leitung 26 im Zwischenraum 34 zwischen Stator 20 und Rotor 30 auftritt. Im Leitungsabschnitt 28 an der Stator-Innenwand 27 verhindert die Führungsrollen 40 ein Lösen der Leitung 26 von der Stator-Innenwand 27. Ferner verhindern die Führungsrollen 40 ein Lösen der Leitung 26 von der Mantelfläche 37 des Rotors 30.

Der Abschnitt der Leitung, der sich außerhalb des Stators 20 erstreckt, ist entlang der äußeren Mantelfläche 29 des Stators 20 in dem Bereich eines Kabelgehäuses 52 geführt. Im Bereich des Kabelgehäuses 52 werden die Enden von Leitungen 26 zusammengeführt, und im Kabelgehäuse 52 kontaktiert. Das Kabelgehäuse 52 kann an einer Außenseite Anschlüsse aufweisen, die mit den Leitungen 26 verbunden sind. Die Anschlüsse stellen eine Verbindung zwischen den Leitungen 26 und dem Roboterarm her. Das Kabelgehäuse 52 ist im Betrieb unbeweglich und stellt eine Schnittstelle dar, mittels der die Leitung 26 mit der vorgelagerten Verkabelung des Roboterarms verbunden ist.

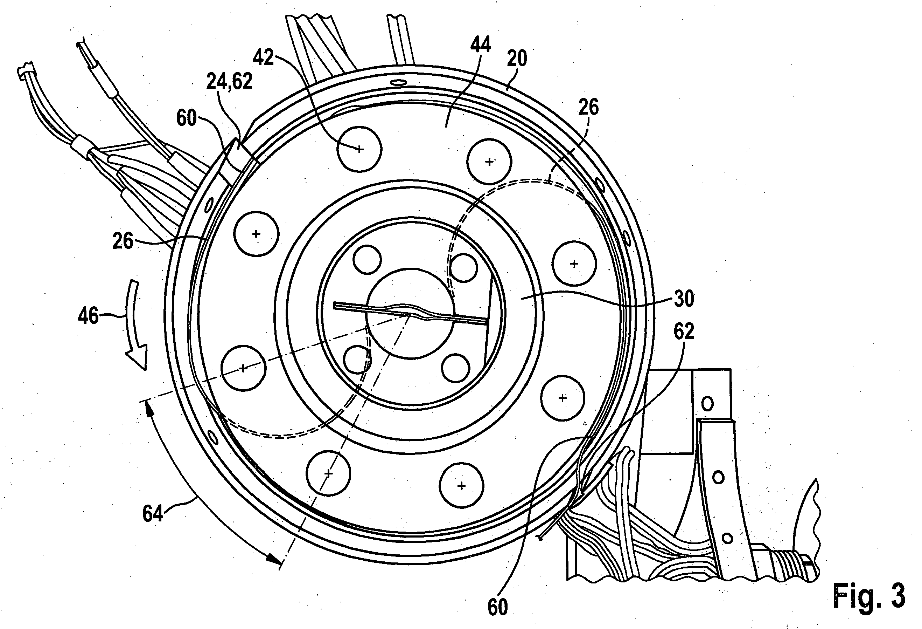

Fig. 3 ist eine Draufsicht auf einen geöffneten Drehübertrager 10. In den Stator 20 ist zentrisch der Rotor 30 drehbar aufgenommen. Leitungen 26 treten an den Ausnehmungen 24 an der Stator-Mantelfläche 29 in den Zwischenraum 34 ein. Dabei treten die Leitungen 26 in einem Tangentialeintritt 62 in den Zwischenraum 34 ein und verlaufen in gleicher Umfangsrichtung 46. Die Leitungen 26 werden im Stator 20 von Führungsrollen 40 geführt, die jeweils auf einer Achse 42 drehbar gelagert sind. Die Achsen 42 sind an einem ringförmigen Rollenträger 42 ausgebildet, der in Fig. 3 die Führungsrollen 40 verdeckt. Ferner weisen die Achsen 42 und die Führungsrollen 40 gleiche Winkelabstände 64 zueinander auf. Es stellt sich ein Leitungsverlauf 60 ein, in dem sich an einer Führungsrolle 40 die Leitung 26 von der Innenwand 27 des Stators 30 löst und zwischen zwei Führungsrollen 40 in zur Umfangsrichtung 46 entgegengesetzter Richtung zum Rotor 30 verläuft.

Die Komponenten des Drehübertragers 10 sind einfach zugänglich und können einfach demontiert und überprüft werden. Im Montagezustand nach Fig. 3 ist eine einfache Funktionalitätsprüfung des Drehübertragers 10 möglich. Eventuelle Montagefehler können einfach festgestellt und behoben werden.

## Patentansprüche

1. Drehübertrager (10), insbesondere für einen Roboter, umfassend einen Stator (20) mit zentrischer Ausnehmung (22) in einem Boden, einen Rotor (30), der in der Zentrischen Ausnehmung (22) im Boden drehbar aufgenommen ist, mindestens eine Leitung (26), wobei ein Abschnitt (28) der Leitung (26) an einer Innenwand (27) des Stators (20) biegeschlaff geführt ist, und der Abschnitt (28) eine Länge für ein zuglastfreies Folgen der Leitung (26) einer Drehung des Rotors (30) um einen Drehwinkel aufweist, **dadurch gekennzeichnet, dass** mehrere Führungsrollen (40) im Zwischenraum (34) zwischen dem Stator (20) und dem Rotor (30) drehbar aufgenommen sind, und in gleichen Winkelabständen (64) zueinander angeordnet sind.

2. Drehübertrager (10) nach Anspruch 1, **dadurch gekennzeichnet, dass** der Stator (20) eine Ausnehmung (24) an einer Mantelfläche aufweist.

3. Drehübertrager (10) nach Anspruch 1 oder 2, **dadurch gekennzeichnet, dass** der Rotor (30) eine Ausnehmung (32) an einer Mantelfläche (37) aufweist.

4. Drehübertrager (10) nach einem der Ansprüche 1 bis 3, **dadurch gekennzeichnet, dass** die Leitung (26) durch die Ausnehmung (24) in der Mantelfläche des Stators (20) geführt ist und an einem Ende in der Ausnehmung (32) der Mantelfläche (37) des Rotors (30) aufgenommen ist.

5. Drehübertrager (10) nache einem der Ansprüche 1 bis 4, **dadurch gekennzeichnet, dass** der Drehübertrager (10) mit einem Deckel (50) ausgestattet ist, der den Stator (20) verschließt und eine zentrische Ausnehmung (54) aufweist, die eine Stirnfläche des Rotors (30) aufnimmt.

6. Drehübertrager (10) nach Anspruch 5, **dadurch gekennzeichnet, dass** der Deckel (50) zu einer festen Verbindung mit einem Ende eines Roboterarms ausgebildet ist, wobei der Rotor (30) drehmoment-übertragend mit einem Antriebsflansch am Ende des Roboterarms gekoppelt ist.

7. Drehübertrager (10) nach einem der Ansprüche 1 bis 6, **dadurch gekennzeichnet, dass** die Leitung (26) mindestens eine elektrische Leitung und/oder mindestens eine Datenleitung und/oder mindestens eine optische Faser und/oder mindestens eine Fluidleitung ist.

8. Drehübertrager (10) nach einem der Ansprüche 1 bis 8, **dadurch gekennzeichnet, dass** die Leitung (26) als Flachbandkabel ausgebildet ist.

9. Drehübertrager (10) nach einem der Ansprüche 1 bis 8, **dadurch gekennzeichnet, dass** eine Mehrzahl von Leitungen (26) im Stator (20) aufgenommen ist, wobei jede Leitung (26) durch eine jeweils eigene Ausnehmung (24) in den Stator (20) geführt ist und in einer jeweils eigenen Ausnehmung (32) am Rotor (30) aufgenommen ist.

10. Drehübertrager (10) nach Anspruch 9, **dadurch gekennzeichnet, dass** die Ausnehmungen (24) in der Mantelfläche des Stators (20) schlitzförmig ausgebildet sind und zueinander gleiche Abstände aufweisen.

11. Drehübertrager (10) nach einem der Ansprüche 1 bis 10, **dadurch gekennzeichnet, dass** die mindestens eine Führungsrolle (40) drehbar auf einer Achse (42) gelagert ist, die sich auf einem ringförmigen Rollenträger (44) befindet.

12. Drehübertrager (10) nach einem der Ansprüche 1 bis 11, **dadurch gekennzeichnet, dass** eine montierbare Klemmplatte (56) im Bereich der Ausnehmung (24, 32) an der äußeren Mantelfläche des Stators (20) und/oder des Rotors (30) angebracht ist, an der die mindestens eine Leitung (26) befestigt ist.

13. Drehübertrager (10) nach einem der Ansprüche 9 bis 11, **dadurch gekennzeichnet, dass** die Leitungen (26) an der Innenwand (27) in gleicher Umfangsrichtung (46) angebracht sind.

14. Drehübertrager (10) nach einem der Ansprüche 1 bis 13, **dadurch gekennzeichnet, dass** ein Abschnitt (28) der mindestens einen Leitung (26), der außerhalb des Stators (20) liegt, anliegend an die äußere Mantelfläche (29) des Stators (20) zu einem Kabelgehäuse (52) geführt ist, das zu einer Kontaktierung und Abdeckung des Endes der mindestens einen Leitung (26) ausgebildet ist.

15. Drehübertrager (10) nach einem der Ansprüche 1 bis 16, **dadurch gekennzeichnet, dass** der Drehwinkel, um den für die Leitung ein zuglastfreies Folgen einer Drehung des Rotors gewährleistet ist, +/- 360° beträgt.

16. Drehübertrager (10) nach einem der Ansprüche 1 bis 15, **dadurch gekennzeichnet, dass** sich ein Leitungsverlauf (60) einstellt, bei dem die Leitung (26) sich an einer Führungsrolle (40) in Umfangsrichtung (46) von der Innenwand (27) des Stators (20) löst und zwischen zwei Führungsrollen (40) in zur Umfangsrichtung (46) entgegengesetzter Richtung zum Rotor (30) verläuft.

## Claims

1. Rotary transmitter (10), in particular for a robot, comprising a stator (20) with a central recess (22) in a base, a rotor (30) which is accommodated in a rotatable manner in the central recess (22) in the base, at least one line (26), wherein a section (28) of the line (26) is routed in a flexurally slack manner on an inner wall (27) of the stator (20), and the section (28) is long enough for the line (26) to follow a rotation of the rotor (30) about a rotation angle without being subject to tensile loading, **characterized in that** a plurality of guide rollers (40) are accommodated in a rotatable manner in the intermediate space (34) between the stator (20) and the rotor (30) and are arranged at identical angular distances (64) in relation to one another.

2. Rotary transmitter (10) according to Claim 1, **characterized in that** the stator (20) has a recess (24) in a lateral surface.

3. Rotary transmitter (10) according to Claim 1 or 2, **characterized in that** the rotor (30) has a recess (32) in a lateral surface (37).

4. Rotary transmitter (10) according to one of Claims 1 to 3, **characterized in that** the line (26) is routed through the recess (24) in the lateral surface of the stator (20) and is received at one end in the recess (32) in the lateral surface (37) of the rotor (30).

5. Rotary transmitter (10) according to one of Claims 1 to 4, **characterized in that** the rotary transmitter (10) is equipped with a cover (50) which closes the stator (20) and has a central recess (54) which receives an end face of the rotor (30).

6. Rotary transmitter (10) according to Claim 5, **characterized in that** the cover (50) is designed to be fixedly connected to one end of a robot arm, wherein the rotor (30) is coupled in a torque-transmitting manner to a drive flange at the end of the robot arm.

7. Rotary transmitter (10) according to one of Claims 1 to 6, **characterized in that** the line (26) is at least an electrical line and/or at least a data line and/or at least an optical fibre and/or at least a fluid line.

8. Rotary transmitter (10) according to one of Claims 1 to 8, **characterized in that** the line (26) is in the form of a ribbon cable.

9. Rotary transmitter (10) according to one of Claims 1 to 8, **characterized in that** a plurality of lines (26) are received in the stator (20), wherein each line (26) is routed through a respectively dedicated recess (24) into the stator (20) and is received in a respectively dedicated recess (32) in the rotor (30).

10. Rotary transmitter (10) according to Claim 9, **characterized in that** the recesses (24) in the lateral surface of the stator (20) are of slot-like design and are at identical distances in relation to one another.

11. Rotary transmitter (10) according to one of Claims 1 to 10, **characterized in that** the at least one guide roller (40) is mounted in a rotatable manner on a shaft (42) which is located on an annular roller support (44).

12. Rotary transmitter (10) according to one of Claims 1 to 11, **characterized in that** a clamping plate (56) which can be mounted is fitted on the outer lateral surface of the stator (20) and/or of the rotor (30) in the region of the recess (24, 32) and the at least one line (26) is fastened to the said clamping plate.

13. Rotary transmitter (10) according to one of Claims 9 to 11, **characterized in that** the lines (26) are fitted to the inner wall (27) in the same circumferential direction (46).

14. Rotary transmitter (10) according to one of Claims 1 to 13, **characterized in that** a section (28) of the at least one line (26), which section is situated outside the stator (20), is routed, in a manner bearing against the outer lateral surface (29) of the stator (20), to a cable housing (52) which is designed to make contact with and cover the end of the at least one line (26).

15. Rotary transmitter (10) according to one of Claims 1 to 16, **characterized in that** the rotation angle about which the line is guaranteed to follow a rotation of the rotor without being subject to tensile loading is +/- 360°.

16. Rotary transmitter (10) according to one of Claims 1 to 15, **characterized in that** a line profile (60) is established in which the line (26) becomes detached from the inner wall (27) of the stator (20) in the circumferential direction (46) at one guide roller (40) and runs between two guide rollers (40) to the rotor (30) in the direction opposite to the circumferential direction (46).

## Revendications

1. Transformateur tournant (10), notamment pour un robot, comprenant un stator (20) avec un évidement centrique (22) dans une base, un rotor (30), qui est renfermé rotativement dans l'évidement centrique (22) dans la base, au moins une ligne (26), dans lequel une portion (28) de la ligne (26) est guidée de manière peu résistante à la flexion sur une paroi intérieure (27) du stator (20), et la portion (28) présente une longueur telle que la ligne (26) suive de manière exempte de charge de traction une rotation du rotor (30) d'un angle de rotation, **caractérisé en ce que** plusieurs rouleaux de guidage (40) sont renfermés rotativement dans l'espace intermédiaire (34) entre le stator (20) et le rotor (30), et sont disposés à des écarts angulaires identiques (64) les uns par rapport aux autres.

2. Transformateur tournant (10) selon la revendication 1, **caractérisé en ce que** le stator (20) présente un évidement (24) sur une surface de gaine.

3. Transformateur tournant (10) selon la revendication 1 ou 2, **caractérisé en ce que** le rotor (30) présente un évidement (32) sur une surface de gaine (37).

4. Transformateur tournant (10) selon une des revendications 1 à 3, **caractérisé en ce que** la ligne (26) est guidée à travers l'évidement (24) dans la surface de gaine du stator (20) et est renfermée à une extrémité dans l'évidement (32) de la surface de gaine (37) du rotor (30).

5. Transformateur tournant (10) selon une des revendications 1 à 4, **caractérisé en ce que** le transformateur tournant (10) est équipé d'un couvercle (50), qui obture le stator (20) et présente une ouverture centrique (54), qui renferme une surface frontale du rotor (30).

6. Transformateur tournant (10) selon la revendication 5, **caractérisé en ce que** le couvercle (50) est conçu en vue d'une liaison solide avec une extrémité d'un bras de robot, dans lequel le rotor (30) est couplé de manière transmettant un couple de rotation avec une bride d'entraînement à l'extrémité du bras de robot.

7. Transformateur tournant (10) selon une des revendications 1 à 6, **caractérisé en ce que** la ligne (26) est au moins une ligne électrique et/ou au moins une ligne de données et/ou au moins une fibre optique et/ou au moins une ligne de fluide.

8. Transformateur tournant (10) selon une des revendications 1 à 8, **caractérisé en ce que** la ligne (26) est conçue comme un câble plat électrique.

9. Transformateur tournant (10) selon une des revendications 1 à 8, **caractérisé en ce qu'**une pluralité de lignes (26) sont renfermées dans le stator (20), dans lequel chaque ligne (26) est guidée à travers un évidement propre respectif (24) dans le stator (20) et est renfermée dans un évidement propre respectif (32) sur le rotor (30).

10. Transformateur tournant (10) selon la revendication 9, **caractérisé en ce que** les évidements (24) sont réalisés en forme de fente dans la surface de gaine du stator (20) et présentent des écarts identiques les uns par rapport aux autres.

11. Transformateur tournant (10) selon une des revendications 1 à 10, **caractérisé en ce qu'**au moins un rouleau de guidage (40) est positionné rotativement sur un axe (42), qui se trouve sur un support de rouleau annulaire (44).

12. Transformateur tournant (10) selon une des revendications 1 à 11, **caractérisé en ce qu'**une plaque de serrage montable (56) au niveau de l'évidement (24, 32) est montée sur la surface de gaine extérieure du stator (20) et/ou du rotor (30), sur laquelle au moins une ligne (26) est fixée.

13. Transformateur tournant (10) selon une des revendications 9 à 11, **caractérisé en ce que** les lignes (26) sont montées sur la paroi intérieure (27) dans la même direction circonférentielle (46).

14. Transformateur tournant (10) selon une des revendications 1 à 13, **caractérisé en ce qu'**une portion (28) d'au moins une ligne (26), qui est située à l'extérieur du stator (20), est guidée de manière à venir reposer sur la surface de gaine extérieure (29) du stator (20) par rapport à un boîtier de câble (52), qui est conçu afin de contacter et recouvrir l'extrémité d'au moins une ligne (26).

15. Transformateur tournant (10) selon une des revendications 1 à 16, **caractérisé en ce que** l'angle de rotation, qui garantit que la conduite suive de manière exempte de charge de traction une rotation du rotor, s'élève à +/- 360°.

16. Transformateur tournant (10) selon une des revendications 1 à 15, **caractérisé en ce qu'**un parcours de ligne (60) est établi, dans lequel la ligne (26) se détache sur un rouleau de guidage (40) dans la direction circonférentielle (46) de la paroi intérieure (27) du stator (20) et s'étend entre deux rouleaux de guidage (40) dans la direction opposée à la direction circonférentielle (46) par rapport au rotor (30).
